# EUROPÄISCHE PATENTSCHRIFT

(11) **EP 1 569 739 B1**
(45) Veröffentlichungstag und Bekanntmachung des Hinweises auf die Patenterteilung: **04.10.2006**
(21) Anmeldenummer: 03753351.0
(22) Anmeldetag: 06.08.2003
(51) Int. Cl.: B01D 53/14, B01D 5/00, F28B 5/00

(54) **VERFAHREN UND VORRICHTUNG ZUR KÜHLUNG VON BRÜDENDÄMPFEN IN EINER DESORPTIONSKOLONNE**
METHOD AND DEVICE FOR COOLING VAPOUR IN A DESORPTION COLUMN
PROCEDE ET DISPOSITIF POUR REFROIDIR DES VAPEURS DANS UNE COLONNE DE DESORPTION

(30) Priorität: 11.12.2002 DE 10258067
(43) Veröffentlichungstag der Anmeldung: 07.09.2005
(73) Patentinhaber: Uhde GmbH, 44141 Dortmund (DE)
(72) Erfinder: THIELERT, Holger, 44379 Dortmund (DE)
(74) Vertreter: Albrecht, Rainer Harald
(86) Internationale Anmeldenummer: PCT/EP2003/008681
(87) Internationale Veröffentlichungsnummer: WO 2004/052509

(56) Entgegenhaltungen:
- DE-A- 2 702 583
- DE-A- 3 714 016
- DE-A- 4 300 131

## Beschreibung

Die Erfindung betrifft ein Verfahren zur Kühlung von aufsteigenden Brüdendämpfen in einer Desorptionskolonne mittels eines am Kopf der Desorptionskolonne angeordneten, als indirekter Wärmetauscher ausgebildeten und von einer Kühlflüssigkeit durchströmten Kondensators, wobei die Kühlflüssigkeit unterseitig in den Kondensator eintritt und durch im Kondensator angeordnete senkrechte Kanäle nach oben strömt.

Der Kopf einer Desorptionskolonne ist üblicherweise mit einem Kondensator ausgerüstet, der mit Kühlwasser betrieben wird und als indirekter Wärmetauscher ausgebildet ist. Beim Betrieb eines indirekten Wärmetauschers besteht kein direkter Kontakt zwischen dem Wärme aufnehmenden und dem Wärme abgebenden Fluid, da die Fluide durch Strömungsführungselemente voneinander getrennt sind und der Wärmetransport durch die Strömungsführungselemente hindurch erfolgt. Bei einem Lastwechsel der Desorptionskolonne besteht die Gefahr, dass die Kühlwassertemperatur sich ändert und es zu Karbonatausfällungen kommt. Dies ist besonders dann der Fall, wenn die für den gewünschten Betriebszustand der Desorptionskolonne erforderliche Kühlwassertemperatur am Austritt des Kondensators hoch ist. Karbonatausfällungen an den Wärmeübertragungsflächen verschlechtern zunehmend das Wärmeübertragungsverhalten im Kondensator und führen letztendlich zu einem Versagen des Apparates. Dieses Problem umgeht man, wenn man die Brüdendämpfe mittels eines direkten Wärmeaustausches, z. B. einer Berieselung des Kolonnenkopfs mit Kühlwasser, abkühlt. Dieser direkte Wärmeaustausch weist allerdings aufgrund der nicht definierten Kühlfläche eine schlechte Regelbarkeit auf.

Der Erfindung liegt die Aufgabe zugrunde, ein Verfahren mit den eingangs beschriebenen Merkmalen anzugeben, bei dem es unabhängig vom Betriebszustand der Desorptionskolonne zu keinen Karbonatausfällungen an den vom Kühlwasser beaufschlagten Wärmetauscherflächen kommt. Ferner soll bei Lastwechsel eine gute Regelungsmöglichkeit gegeben sein.

Erfindungsgemäß wird die Aufgabe dadurch gelöst, dass eine Schwefelwasserstoff enthaltende Kühlflüssigkeit verwendet wird und dass die Kühlflüssigkeit nach der Wärmeaufnahme durch oberseitige Öffnungen der Kanäle an der Oberseite des Kondensators als Überlauf austritt. Die Kühlfläche des Kondensators ist durch die Wärmetauscherflächen vorgegeben. Bei einem Lastwechsel der Desorptionskolonne kann die Temperatur der Kühlflächen durch die Kühlwassermenge sehr einfach und präzise nachgeregelt werden. Dabei kann durch die erfindungsgemäße Verfahrensführung in Verbindung mit der Verwendung einer Schwefelwasserstoff enthaltenden Kühlflüssigkeit eine Ablagerung von Karbonaten an den Wärmetauscherflächen wirkungsvoll vermieden werden.

Gemäß dem erfindungsgemäßem Verfahren fließt der Überlauf in die Desorptionskolonne. Durch die Aufgabe eines mit Schwefelwasserstoff angereicherten Kühlwassers in die Desoptionskolonne wird der Schwefelwasserstoff nach der Wärmeübertragung direkt wieder vom Kühlwasser getrennt, da der sehr leicht siedende Schwefelwasserstoff gemeinsam mit den gekühlten Brüdendämpfen die Desorptionskolonne am Kopf verlässt, während das deutlich schwerer siedende Wasser in den Sumpf der Desorptionskolonne fließt. Somit ist kein zusätzlicher Verfahrensschritt notwendig, um den Schwefelwasserstoff aus dem Kühlwasser wieder zu entfernen.

Gegenstand der Erfindung ist auch eine Desorptionskolonne nach Anspruch 2 zur Durchführung des Verfahrens.

Im Folgenden wird die Erfindung anhand einer lediglich ein Ausführungsbeispiel darstellenden Zeichnung ausführlich erläutert. Es zeigen:
- Fig. 1: eine schematische Darstellung eines am Kopf einer Desorptionskolonne angeordneten Kondensators und
- Fig. 2: eine detaillierte Darstellung des in Fig. 1 dargestellten Kondensators.

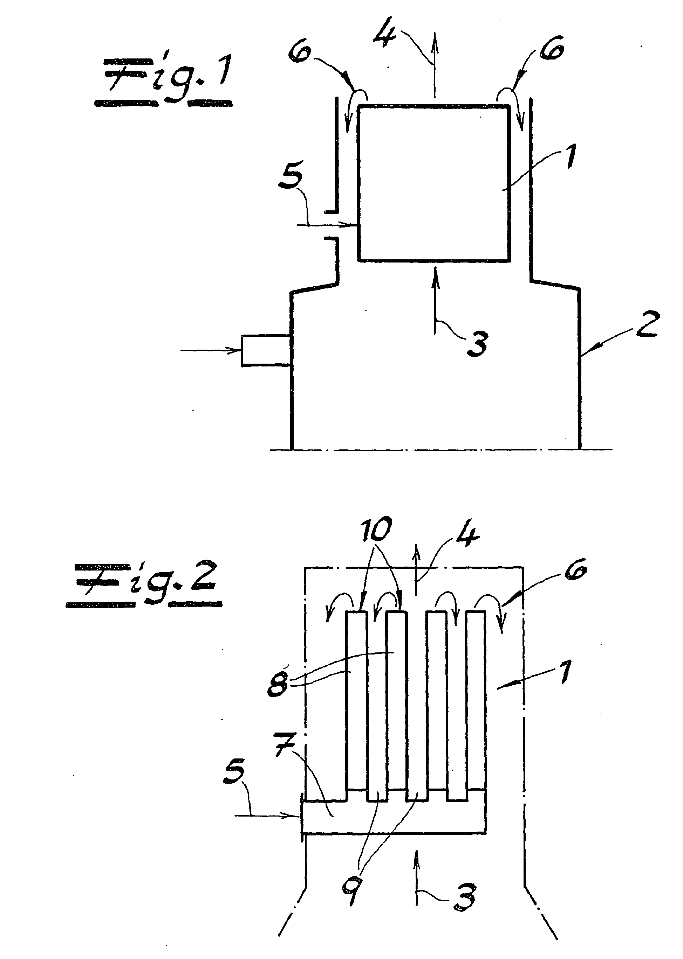

Fig. 1 zeigt einen Kondensator 1, der am Kopf einer Desorptionskolonne 2 angeordnet ist. Aus der Desorptionskolonne steigen Brüdendämpfe 3 auf, welche mittels des Kondensators gekühlt werden. Die Brüdendämpfe 3 treten an der Unterseite des Kondensators 1 ein. Die nicht kondensierenden, an Wärmetauscherflächen des Kondensators gekühlten Gase 4 treten an der Oberseite des Kondensators 1 aus und strömen weiter nach oben. Das erfindungsgemäß mit Schwefelwasserstoff angereicherte Kühlwasser 5 tritt unterseitig in den Kondensator ein. Während der Wärmeaufnahme strömt das Kühlwasser 5 im Kondensator nach oben und tritt als Überlauf 6 an der Oberseite des Kondensators aus. Der Überlauf 6 fließt in die Desorptionskolonne 2.

Fig. 2 zeigt den Aufbau des erfindungsgemäßen Kondensators 1. Der Kondensator 1 weist eine Verteilervorrichtung 7 sowie Wärmetauscherflächen bildende Kanäle 8 auf und ist im Kolonnenkopf der Desorptionskolonne 2 angeordnet. Die Verteilervorrichtung 7 ist von Kühlwasser 5 durchströmbar und dient zur Verteilung des in dem Kondensator 1 einströmenden Kühlwassers 5. Die Verteilervorrichtung 7 ist fest mit den flüssigkeitsdurchströmten Kanälen 8 verbunden, die senkrecht angeordnet sind. Die Abschnitte 9 zwischen den Kanälen 8 sind so gewählt, dass die Außenflächen der Kanäle 8 von aufsteigenden Brüdendämpfen 3 umströmbar sind. Die Kanäle weisen oberseitige Öffnungen 10 auf, aus denen die Kühlflüssigkeit austritt.

## Patentansprüche

1. Verfahren zur Kühlung von aufsteigenden Brüdendämpfen (3) in einer Desorptionskolonne (2) mittels eines am Kopf der Desorptionskolonne (2) angeordneten, als indirekten Wärmetauscher ausgebildeten und von Kühlwasser durchströmten Kondensators (1), wobei das Kühlwasser unterseitig in den Kondensator (1) eintritt und durch im Kondensator (1) angeordnete senkrechte Kanäle (8) nach oben strömt, wobei Schwefelwasserstoff enthaltendes Kühlwasser verwendet wird, wobei das Kühlwasser nach der Wärmeaufnahme durch oberseitige Öffnungen (10) der Kanäle (8) an der Oberseite des Kondensators (1) als Überlauf (6) austritt, und wobei der Überlauf (6) in die Desorptionskolonne (2) fließt.

2. Desorptionskolonne zur Durchführung des Verfahrens nach Anspruch 1 mit einem Kolonnenkopf, einem darin angeordneten Kondensator (1), der von Kühlwasser beaufschlagte Kanäle (8) aufweist, wobei die Kanäle (8) senkrecht angeordnet und von unten nach oben durchströmbar sind und Wärmetauscherflächen zur Kühlung von aufsteigenden Brüdendämpfen bilden, und wobei die Kanäle (8) oberseitige Öffnungen aufweisen und **dadurch** ein Überlauf (6) für das Kühlwasser bilden, der in die Kolonne (2) abfließt.

## Claims

1. Method for cooling rising vapours (3) in a desorption column (2) by means of a condenser (1) designed as an indirect heat exchanger which is arranged at the head of the desorption column (2) and is flowed through by cooling water, wherein the cooling water enters the condenser (1) at the bottom and flows upwards through vertical channels (8) arranged in the condenser (1), wherein cooling water containing hydrogen sulphide is used, wherein the cooling water, after heat absorption has occurred, exits as an overflow (6) at the top of the condenser (1) through top openings (10) of the channels (8), and wherein the overflow (6) flows into the desorption column (2).

2. Desorption column for carrying out the method according to Claim 1, comprising a column head and a condenser (1) which is arranged therein and which has channels (8) which are flowed through by cooling water, wherein the channels (8) are arranged vertically and can be flowed through from the bottom to the top and form heat exchanger surfaces for cooling rising vapours, and wherein the channels (8) have top openings and as a result form an overflow (6) for the cooling water, which flows off into the column (2).

## Revendications

1. Procédé de refroidissement de vapeurs ascendantes (3) dans une colonne de désorption (2) au moyen d'un condenseur (1) monté en tête de la colonne de désorption (2), réalisé sous forme d'échangeur thermique indirect et balayé par de l'eau réfrigérante, procédé dans lequel l'eau réfrigérante pénètre côté inférieur dans le condenseur (1) et s'écoule vers le haut au travers de canaux verticaux (8) disposés dans le condenseur (1), de l'eau réfrigérante renfermant de l'acide sulfhydrique est utilisée, l'eau réfrigérante s'échappe sous forme de trop-plein (6), après l'absorption de chaleur, au travers d'ouvertures supérieures (10) des canaux (8) sur le côté supérieur du condenseur (1), et le trop-plein (6) s'écoule dans la colonne de désorption (2).

2. Colonne de désorption pour la mise en oeuvre du procédé suivant la revendication 1 comprenant une tête de colonne, un condenseur (1) monté dans cette dernière, qui comporte des canaux (8) alimentés en eau réfrigérante, les canaux (8) étant disposés verticalement, pouvant être balayés du bas vers le haut et formant des surfaces d'échange thermique pour le refroidissement des vapeurs ascendantes, et les canaux (8) présentant des ouvertures côté supérieur et formant de ce fait un trop-plein (6) pour l'eau réfrigérante, qui s'écoule dans la colonne (2).
